# EUROPÄISCHE PATENTANMELDUNG

(11) **EP 3 553 117 A1**
(43) Veröffentlichungstag der Anmeldung: **16.10.2019**
(21) Anmeldenummer: 19000165.1
(22) Anmeldetag: 02.04.2019
(51) Int. Cl.: C08J 9/00, C08K 5/00

(54) **XPS-PLATTEN UND EPS-PLATTEN MIT EINGEARBEITETEM FLAMMSCHUTZ**

(30) Priorität: 12.04.2018 DE 102018002978; 25.04.2018 DE 102018003373
(71) Anmelder: Jackon Applications GmbH, 23970 Wismar (DE)
(72) Erfinder: Falge, Joachim, 23689 Luschendorf (DE); Plate, Mark, Lüneburg (DE); Tank, Claus, 23560 Lübeck (DE)
(74) Vertreter: Kaewert, Klaus

(57) **Zusammenfassung**

Nach der Erfindung wird als Flammschutzmittel/Brandschutzmittel bei der Polystyrolschaumherstellung depolymerisiertes Lignin eingesetzt.

## Beschreibung

Die Erfindung betrifft XPS-Platten und EPS-Platten mit eingearbeitetem Flammschutzmittel, insbesondere zu Bauzwecken.

Polystyrol (PS) ist ein thermoplastischer Kunststoff.
Thermoplaste sind Kunststoffe, die unter Erwärmung erweichen und sich in dem Erweichungszustand verformen lassen und nach Abkühlung die erlangte Form behalten. Dieser Vorgang ist oft wiederholbar.
Zu den Thermoplasten zählen zum Beispiel: Acrylnitril-Butadien-Styrol, (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC).
Weiter gehören zu den Thermoplasten die Massenkunststoffe Polystyrol und Polyolefine wie Polyethylen und Polypropylen.

In obiger Aufzählung finden sich Polymere wie Polycarbonat, Polyethylen, Polypropylen, Polystyrol. Die anderen Kunststoffe sind Copolymere. Das heißt, die Copolymere sind aus verschiedenen Monomeren aufgebaut.

Üblicherweise werden die Kunststoffe zusammen mit Additiven und Füllstoffen verarbeitet. Die Additive sollen dem gewünschten Produkt bestimmte Eigenschaften geben; zum Beispiel erhöhte Festigkeit und/oder erhöhte

Alterungsbeständigkeit und/oder erhöhte Elastizität oder eine höhere Wärmebelastbarkeit. Weiter können sie dazu dienen die Verarbeitung zu erleichtern.
Die Additive können andere Kunststoffe, Substanzen, Gemische von Substanzen und vieles andere sein; zum Beispiel Fasern, Glaskügelchen, Späne usw.
Die Füllstoffe dienen dazu, den Kunststoff zu strecken.

Mit XPS-Platten werden Polystyrolschaumplatten bezeichnet, die mittels eines Extruders so hergestellt werden,
- daß die Einsatzstoffe einschließlich Polystyrol, Additive und Füllstoffe aufgegeben werden,
- das Polystyrol aufgeschmolzen und mit den anderen
   Einsatzstoffen vermischt wird
- die Treibmittel in die flüssige Polystyrolschmelze eingegeben werden
- daß aus dem Extruder durch eine Düse ein endloser Schmelzestrang in eine Umgebung geringeren Druckes austritt und aufschäumt
- der nach Formgebung in einem Kalibrator und
- nach ausreichender Abkühlung als Extrusionsstrang spanabhebend bearbeitet wird
- und zu Platten abgelängt wird.

Mit EPS-Platten werden Polystyrolschaumplatten bezeichnet, die durch Expansion von treibmittelbeladenen Polystyrolbeads (Polystyrolgranulat) hergestellt werden. Die treibmittelbeladenen Polystyrolbeads können auf zwei Wegen hergestellt werden können.
Im ersten Weg wird Monostyrol in einer wässrigen Suspension zu Polystyrolbeads polymerisiert und anschließend mit Treibmittel beladen.
Der zweite Weg sieht vor:
- Schmelzeerzeugung wie bei der XPS-Herstellung mit eingeschlossenem Treibmittel
- Austritt verschiedener endloser feiner Schmelzestränge mittels kleiner Düsen vor,
- wobei die Schmelze nach dem Austritt aus dem Extruder in eine Umgebung hohen Druck gelangt ohne zu expandieren und
- die Schmelzestränge zu Granulat zerkleinert werden
   Das geschieht vorzugsweise unter Wasser
- das Granulat mit Treibmittel beladen wird
- das Granulat wird anschließend in einem Formteilautomaten zu einem Block verarbeitet. Das geschieht nach Einfüllen des Granulats in den Formteilautomaten durch Bedampfung des Granulates mit Heißdampf. Durch diese Bedampfung erweicht das Granulat, so daß die verschiedenen Partikel unter dem Druck in dem Formteilautomaten miteinander verschweißen. Nach ausreichender Abkühlung wird der Block aus dem Formteilautomaten entnommen und in Platten geschnitten.

Sowohl die XPS-Platten wie auch die auf vorstehend beschriebenem Weg erzeugten EPS-Platten sind herkömmlich mit einem Flammschutz versehen, der in der oben beschriebenen Form als Zuschlag in den Extruder aufgegeben worden ist. Im Extruder findet eine gleichmäßige Verteilung des Flammschutzes in der Schmelze statt. Dementsprechend ist das Flammschutzmaterial auch gleichmäßig in den XPS-Platten und den EPS-Platten verteilt.

Der Extruder kommt in verschiedenen Bauarten vor, besonders häufig als Einschneckenextruder. Dabei läuft in einem Gehäuse eine Schnecke um, welche den Kunststoff zur Extrusionsdüse transportiert.
Eine andere häufig vorkommende Bauart ist der Doppelschneckenextruder. Dabei sind zwei Schnecken in einem Gehäuse parallel zueinander vorgesehen, die entweder gleichsinnig oder gegenläufig rotieren.

Eine seltenere Bauart ist der Planetwalzenextruder, der aus einem innen verzahnten fest angeordneten Gehäuse, einer mittig umlaufenden Zentralspindel und verschiedenen Planetspindeln besteht, die zwischen dem Gehäuse und der Zentralspindel um die Zentralspindel umlaufen. Die Verzahnung der Planetspindeln kämmt mit der Verzahnung der Zentralspindel und der Innenverzahnung des Gehäuses.

Allen Extruderbauarten ist gemeinsam, daß zur Herstellung von Kunststoffschaum eine Schmelze erzeugt und mit Treibmittel versetzt wird. Das Treibmittel wird nach Entstehen der Schmelze als Flüssigkeit in den Extruder gespritzt.
Im Extruder wird das Treibmittel mit der Schmelze vermischt.
Im Extruder verhindert der dort herrschende Druck ein Aufschäumen des Kunststoffes. Das Aufschäumen erfolgt beim Austritt der Schmelze aus dem Extruder in eine Atmosphäre geringeren Druckes (zumeist Umgebungsdruck).

Die XPS-Platten wie auch die EPS-Platten werden als Bauprodukte eingesetzt. In vielen Ländern ist das nur erlaubt, wenn diese Platten mit einem ausreichenden Flammschutz versehen sind.

Flammschutzmittel können unweltgefährdend oder/und gesundheitsgefährlich sein. Manche Flammschutzmittel sind mit dem zu schäumenden Kunststoff nicht kompatibel. Besondere Schwierigkeiten ergeben sich bei der Einmischung von Flammschutzmitteln in Polystyrol.
Außerdem ist die Wirkung vieler Flammschutzmittel gering. Das zeigt sich im Brandfall. Es zirkulieren in den Medien erschreckende Bilder von Fassadenbränden, bei denen eine Wärmedämmung der Fassade aus Polystyrolschaumplatten in Brand geraten ist. Dabei entwickelt sich der Brand mit hoher Geschwindigkeit, sobald der Kunststoff sich durch entsprechende Erwärmung verflüssigt und in der flüssigen Form durch eine Flamme entzündet wird. Für Personen, die sich noch in den zugehörigen Gebäuden befinden, wird das Verlassen der Gebäude extrem schwierig.

Die Flammschutzmittel werden der Polymermatrix zugesetzt, um den Verbrennungsprozess zu hemmen, zu unterdrücken oder zu beenden. Sie wirken hauptsächlich auf die Entzündbarkeit des Materials oder verringern die Flammenausbreitung. Dabei sollen sie andere Eigenschaften des Polymers, wie z.B. die Mechanik oder das Aussehen (zum Beispiel die Transparenz, Farbe) möglichst wenig oder gar nicht beeinflussen.

Im Einzelnen:
Nach Entzünden setzt das brennende Material Wärme frei und verursacht eine zusätzliche Temperaturerhöhung. Dadurch werden Pyrolyseprozesse beschleunigt und weiteres brennbares Material entzündet. Für die Geschwindigkeit der Brandentwicklung sind die Wärmefreisetzung (Wärmeentwicklung) und Entzündbarkeit des Materials und die dadurch bedingte Flammenausbreitung verantwortlich.

Durch starke Wärmeentwicklung und große Gasfreisetzung kann im Laufe des Brandes (besonders bei Raumbränden) ein Gasgemisch entstehen, das eine Brandausdehnung mit sehr hoher Geschwindigkeit verursacht. Dieses plötzliche Zünden und Abbrennen von Pyrolysegasen wird als Rauchgasdurchzünden/feuerüberschlagender Flash over bezeichnet.

Der Brand erreicht seine höchsten Temperaturen. Das gesamte brennbare Material (Brandlast) ist involviert (Branddurchdringung). Die Brandlast ist ausschlaggebend für das Ausmaß des Brandes und den daraus resultierenden Schaden. Erst aus der Erschöpfung einer der Brandkomponenten (brennbares Material oder Sauerstoff) resultiert das Abklingen des Brandes.

Die Flammschutzmechanismen hängen stark von der chemischen Struktur des Flammschutzmittels und seiner Wechselwirkung mit dem Polymer ab. Das grundlegende Verständnis der Struktur-Eigenschaftsbeziehungen ist die Grundvoraussetzung für die gezielte Entwicklung maßgeschneiderter Flammschutzlösungen und die Optimierung der Flammschutzmechanismen und -wirkung für eine bestimmte Anwendung.

Flammschutzmittel dienen zur Hemmung, im Idealfall zur Vermeidung der Entzündung, Flammenausbreitung und/oder Brandlast. Man kann zwischen physikalischen und chemischen Wirkungsweisen unterscheiden.

Zu den chemischen Mechanismen: Mittels einer Reaktion in der Gasphase wird durch das Flammschutzmittel der Radikalmechanismus unterbrochen und somit die Oxidationsreaktion gehemmt, die effektive Verbrennungsenthalpie des Materials sinkt. Dadurch wird der Wärmeeintrag der Flamme verringert und die Wärmefreisetzung reduziert.

Typische Radikalfänger sind halogenhaltige Flammschutzmittel auf Basis von Chlor oder Brom.

Zu den physikalischen Mechanismen:
Die Abgabe von Wasser bewirkt eine Kühlung der Flamme. Die endotherme Abgabe nicht brennbarer Gase wie H2O, CO2 oder Stickstoffverbindungen verursacht eine Brennstoffverdünnung. Durch Erhöhung der Verdampfungsenthalpie und Reduzierung der effektiven Verbrennungsenthalpie kann dem Brand entgegen gewirkt werden. Beispiele sind Alumiumtrihydroxid (ATH), Magnesiumhydroxid und bromhaltige Verbindungen.

Inerte Füllstoffe ersetzen brennbares durch nicht brennbares Material und bewirken eine Verdünnung.

Auch die Erfindung hat sich die Aufgabe gestellt, einen geeigneten Flammschutz für EPS und XPS zu entwickeln, der zeitgemäße Anforderungen erfüllt.

Dabei geht die Erfindung von der Erkenntnis aus, daß unter den vielen bekannten Brandschutzmitteln nur wenige Brandschutzmittel ständig angewendet werden. Manche Brandschutzmittel sind bloßer papierner Stand der Technik. Dazu gehört unter anderem Lignin.

In der DE 102009050546 wird die Verwendung eines Flammschutzmittels/Brandschutzmittels im Zusammenhang mit faserverstärktem Polystyrol vorgeschlagen. Dabei soll es sich um Naturfasern von Pflanzen handeln. Allerdings sollen Pflanzen ausgewählt werden, die noch nicht verholzt sind, also nur eine geringe Menge oder gar keine Menge Lignin enthalten. Damit weist die Druckschrift nicht auf Lignin, sondern von Lignin weg.

Die WO 2011047804 stimmt inhaltlich mit der DE 102009050546 überein.

Auch die WO 2017118765 beschreibt eine Ausrüstung von Fasern mit Flammschutz/Brandschutz zur Verwendung in einem Polystyrol, auch in einem geschäumten Produkt. Im Unterschied zu den in DE102009050546 beschriebenen Fasern sind nach der WO2017118765 Lignin haltige Fasern.

Die DE102017100313 stimmt inhaltlich mit der WO 2017118765 überein.

Die WO 2014184273 beschreibt zwar eine Polyolefinmatrix mit einem eingemischten Lignin. Es handelt sich jedoch um einen Vorschlag zur Modifizierung von WPC (wood plastic composition), das als Holzersatz angesehen werden kann.

Die DE 102007054549 beschreibt auch eine Polyolefinmatrix für WPC mit einem eingemischten biobasierenden Kunststoff aus Lignin.

Die DE 2436166 aus dem Jahre 1974 beschreibt ein Flammschutzmittel für verschiedene Zwecke, unter anderem für den Schutz von Polystyrol. Der bekannte Flammschutz soll keine giftigen Gase bilden und lange Zeit anhalten.
Der bekannte Flammschutz soll durch Schmelzen einer Ligninverbindung mit einer Harnstoffverbindung in der Hitze herstellbar sein. Als Ligninverbindung kommen Lignin, Ligninsulfonsäure oder Ligninsulfonat in Frage. Als Harnstoffverbindung kommen Harnstoff oder Harnstoffderivate in Frage. Danach können die Massen mit einem thermoplastischen Kunststoff, einem Phosphoresäurederivat oder einem mehrwertigen Metallsalz vermachen.
Die Ligninsulfonsäure (Lignosulfonsäure) kann hergestellt werden, indem man Lignin mit schwefliger Säure, Hydrogensulfit oder Sulfit umsetzt. Nach der DE2436166 können bei der Neutralisation der Ligninsulfonsäure Alkalimetallsalze und Erdalkalimetallsalze entstehen; zum Beispiel mit Na, K, Mg, Ca, Ba oder Ammonisumsalze. Die vorgesehene Phosphorsäuren und Phosphorsäurederivate umfassen phosphorige Säure, unterphosphorige Säure, Phosphorsäure, Metaphosphorsäure, Polymetaphosphorsäure, Polyphosphorsäure und Alkalimetallsalze oder Erdalkalimetalllsalze.
Das Verhältnis der verschiedenen Bestandteile liegt im Bereich 0,3 bis 1,0 Gewichtsteiles des Harnstoffs oder der Harnstoffverbindung auf 1 Gewichtsteiles des Lignins, der Ligninsulfonsäure oder des Ligninsulfonats.

Die WO 2016/150780 befaßt sich mit der Ligningewinnung.

Dort wird das Ligninsulfonat
vorzugsweise in einer Menge von 1 bis 100 Gew-Teilen, vorzugsweise 10 bis 70 Gew-Teilen auf 100 Gew-Teile Monomere bezogen auf die Summe aller Monomere eingesetzt. Dabei zählt Ligninsulfonat nicht als Monomer. Ligninsulfonate sind die Salze von Ligninsulfonsäure (auch als Lignolsulfonsäure bezeichnet) lösliche Produkte der Umwandlung von Lignin mit Hilfe von schwefliger Säure oder Sulfiten. Die im Rahmen dieses Vorschlages verwendete Ligninsulfonsäure kann somit bei der Herstellung von Cellulose, ausgehend von Holz, als natürlichem Rohstoff, erhalten werden. Bei einer Stufe der Herstellung von Cellulose vermischt man das Lignin des Holzes mit schwefliger Säure. Bei dieser Behandlung wird das Lignin sulfoniert und in Ligninsulfonsäure umgewandelt, die dann mit einer geeigneten Base neutralisiert, die Bildung des entsprechenden Salzes ergibt. Je nach der verwendeten Base erhält man wasserlösliche Salze von Natrium, Ammonium, Calcium, Magnesium usw. der genannten Ligninsulfonsäure. Die Ligninsulfonate liegen im Allgemeinen in Form eines hellgelben Pulvers vor, das sich bei etewa 200 Grand Celsius zersetzt. Ihr Molekulargewicht beträgt vorzugsweise von 1.000 bis 70.000, insbesondere von 7000 bis 52000 g/mol.

Die Unterschiede zwischen Ligninsulfonaten der DE 2436166 und der WO2016/150780 werden damit erklärt, daß das Lignin einer Holzsorte sich erheblich von dem Lignin anderer Holzsorten unterscheidet. Das heißt, das Ligninsulfonat der DE 2436166 muß von einem anderen Holz als das Lignin der WO 2016/150780 sein.

Außerdem hat Einfluß,
- mit welchem Lösungsmittel
- mit welcher Säure das gelöste Lignin behandelt wird
- wie die Säure neutralisiert wird.

Nach der Neutralisation fällt das Lignin als ein Schlamm an, der eingedickt/eingetrocknet wird.
Nach der Eindickung/Eintrocknung kann das Lignin in dicken Brocken gewonnen werden, die zumeist staubfein aufgemahlen werden.

Das Lignin ist verschiedensten industrieellen Anwendung zugeführt worden. Bekannt sind die Verwendung für Vanillin, als Reinigungsmittel, als Flotationsmittel für Erze, als Dispergatoren für Farbstoffe, für Insektizide und Pestizide.

Der Einsatz von Lignin hat sich für Polystyrol nicht durchsetzen können. Das wird darauf zurückgeführt, daß Lignin in nennenswerten Zumischungsmengen zur Entmischung vom Polystryrol neigt.

Die Erfindung hat sich diesem seit 1974 bekannten Flammschutzmittel wieder zugewandt, um dieses Flammschutzmittel bei der Herstellung von Dämmplatten aus extrudiertem Polystyrolschaum zu verwenden.
Das wird mit den Merkmalen des Hauptanspruches erreicht.

Die Unteransprüche beschreiben bevorzugte Ausführungsbeispiele. Besonders vorteilhaft ist
- daß depolymerisiertes Lignin der Einsatzmischung zugesetzt wird, wobei der Anteil des depolymerisierten Lignins oder der Derivate von depolymerisiertem Lignin höchstens 50Gew%, vorzugsweise höchstens 25 Gew% und noch weiter bevorzugt höchstens 10 Gew% und höchst bevorzugt höchstens 3 Gew% beträgt, bezogen auf die gesamte Einsatzmischung
- die Zugabe mindestens eines weiteren Flammschutzmittel aus folgender Gruppe
   --Bimsgestein, Blähton
   --Fasern aus Glas oder Keramik
   --feuerfester Mörtel
   --kohlenstoffhaltige Flammschutzmittel, Blähgrafit
   --Kreide, Kalk, Gips
   --Metallhydroxide
   --Mineralien, Feuerstein-Siliziumdioxid, Silikate
   --Mikroglaskugeln
   --Phosphor (rot)
   --phosphorhaltige Flammschutzmittel
   --Phosphorverbindungen enthaltende Flammschutzmittel
   --Schamotte
   --Schwefel (gelb)
   --Talkum
   --Vermiculit
   --Wasserglas
- die Zugabe von Aluminiumhydroxid oder von Magnesiumhydroxid, wobei die Schaumherstellung im Falle von Magnesiumhydroxid unterhalb der Zersetzungstemperatur des Magnesiumhydroxids erfolgt oder im Falle von Aluminiumhydroxid das Aluminiumhydroxid durch eine Ummantelung mit einem Kunststoff, der eine höhere Schmelztemperatur als Polystyrol besitzt, gegen eine Zersetzung geschützt ist.
- die Zugabe von Blähgrafit,
   wobei die Zugabemenge von Blähgrafit in Bezug auf das Lignin die gleiche ist wie die von Aluminiumhydroxid oder von Magnesiumhydroxid und
   das Blähgrafit eine Partikelgröße hat, die kleiner als der Zelldurchmesser des Kunststoffschaumes ist.
- daß das depolymerisierte Lignin und das Polystyrol unabhängig voneinander erwärmt werden und nach dem Aufschmelzen des Polystyrols eine Vermischung stattfindet.
- eine Zwangsführung feinkörniger und staubförmiger Flammschutzmittel/Brandschutzmittel bei der Aufgabe in den Extruder.
- die Verwendung eines senkrecht über der Füllöffnung des Extruders stehenden weiteren Extruders mit einer Kühlung als Materialzuführung.
- eine Beheizung von in den Extruder eingefüllten feuchten Einsatzstoffen zur Verdampfung der Feuchte und anschließende Entfernung des Dampfes durch Entgasung.
- daß bei der Trocknung der feuchten Einsatzstoffen eine Restfeuchte verbleibt und als Co-Treibmittel bei der Schaumherstellung genutzt wird..
- daß zunächst ein Masterbatch aus einem oder mehreren Flammschutzmitteln mit einer Teilmenge des Polystyrols in Granulatform erzeugt wird und anschließend mit den übrigen Einsatzstoffen im Extruder zusammen geführt wird.
- die Masterbatchzeugung ohne das Treibmittel erfolgt.
- die zur Masterbatcherzeugung verwendete Teilmenge des Polystyrols höchstens 30Gew%, vorzugsweise höchstens 20Gew% und noch weiter bevorzugt höchstens 10Gew% der Einsatzmischung im Extruder ist.

Dabei findet ein Lignin Anwendung, das depolymerisiert ist. Zur Depolymerisierung stehen verschiedene Verfahren zur Verfügung. Zum Beispiel nennt die EP 3266810 A1 einige mögliche Verfahren, die auf dem Einsatz von Wasserstoff im Autoklaven zusammen mit Katalysatoren auf Nickel-Basis arbeiten. Nach der EP 3266810 soll dabei ein mittleres Molekulargewicht (Mw) von 600 bis 2000 g/mol erreicht werden. Das Mw nach dieser Druckschrift wie folgt gemessen:
Mw calculated after size exclusion chromatograhy using polystyrene as standard for calibration
Das Ausgangsmolekulargewicht ist in dieser Druckschrift offen, so daß der Depolymerisierungsgrad unklar bleibt. Der Depolymerisierungsgrad ist hier gleichbedeutend mit dem Prozentsatz der Reduzierung des Molgewichtes Außerdem ist offen, in welchem Umfang das eingesetzte Lignin bei den bekannten Verfahren umgesetzt wird. Laborversuche kommen zu einer Umsetzung von 2%, bezogen auf die eingesetzte Ligninmenge. Bei industrieller Anwendung wird mit einer Umsetzungsrate bis zu 100% gerechnet, wenn das noch nicht depolymerisierte Lignin wieder in den Depolymerisiereungsvorgang zurück geführt wird. Dabei ist allerdings zu berücksichtigen, daß das Ausschleusen des bereits depolymerisierten Lignins Aufwand erfordert.

Von Vorteil ist, wenn ein mittleres Molekulargewicht (Mw) von 1000 bis 10.000 g/mol erreicht wird, vorzugsweise von 2000 bis 8000 g/mol, noch weiter bevorzugt 3000 bis 6000 g/mol.

Für die Schaumherstellung wird das depolymerisierte Lignin wahlweise in größerer Menge bis 50 Gew%, vorzugsweise bis 25Gew% und noch weiter bevorzugt bis 10Gew% und höchst bevorzugt bis 3Gew%, bezogen auf die gesamte Einsatzmischung im Extruder, eingesetzt. Solange depolymerisiertes Lignin im Unterschied zu normalem (nicht depolymerisiertem Lignin) nur in bescheidenen Mengen und erheblichen Kosten verfügbar ist, kann eine deutlich geringere Menge an depolymerisiertem Lignin eingesetzt werden. Der Anteil an depolymerisiertem Lignin kann auch noch deutlich kleiner als 3Gew% werden, zum Beispiel 1Gew% oder 0,5Gew%, bezogen auf die gesamte Einsatzmischung im Extruder.
Dabei wird vorzugsweise neben dem depolymerisierten Lignin noch anderes Flammschutzmittel/Brandschutzmittel zugesetzt.
Bei diesen Flammschutzmitteln/Brandschutzmitteln ist zu unterscheiden
- zwischen inerten Mitteln und aktiven Mitteln
- kohlenstoffhaltige Flammschutzmittel
- phosphorhaltige Flammschutzmittel
- phosphorverbindungshaltige Flammschutzmittel
- stickstoffverbindungshaltige Flammschutzmittel
- Metalloxide und/oder -hydroxide

Zu den aktiven Mitteln gehört das an sich bekannte Aluminiumhydroxid (ATH). Das ATH zersetzt sich im Brandfall und gibt Wasser ab, das die Flamme löschen kann. Die Verwendung von ATH ist an sich bekannt, auch zur Flammschutzausrüstung von Polystyrolschaum. Beispielhaft wird Bezug genommen auf die DE 2811951. Anstelle des ATH kann auch Magnesiumhydroxid zur Anwendung kommen. Magnesiumhydroxid hat die gleiche Wirkung wie ATH. Die Zersetzung beginnt jedoch erst bei deutlich höherer Temperatur als bei ATH.
Die Verwendung von ATH bedingt eine kontrollierte Temperaturführung bei der Schaumherstellung unter der Zersetzungstemperatur.

Die Temperaturführung bei der Schaumherstellung unterhalb der Zersetzungstemperatur des verwendeten Metallhydroxids wird mit Magnesiumhydroxid viel leichter.

Wahlweise wird dem Polystyrol und depolymerisiertem Lignin anstelle oder zusätzlich zu dem Metaillhydroxid eine Menge von Blähgrafit zugesetzt.
Die Gesamtmenge von depolymerisiertem Lignin plus Flammschutzmittel hat gegenüber der gleichen Menge herkömmlichen Flammschutzmittels ohne Lignin eine höhere Flammschutz/Brandschutzwirkung. Dadurch wird die synergetische Leistung des depolymerisierten Lignins deutlich.

Das Blähgrafit erfährt im Brandfall eine große Ausdehnung und isoliert dadurch die Brandfläche vor dem weiteren Angriff von Flammen.
Das Blähgrafit führt nicht zugleich zu einer Ausdehnung der Polystyrolschaumplatten, wenn die Blähgrafitpartikel kleiner als der Zelldurchmessser des Polystryrolschaumes sind. Dann ist eine Ausdehnung des Blähgrafits in die Zellen möglich. Vorzugsweise ist der Durchmesser der Blähgrafitpartikel kleiner als das 0,1 fache des Zelldurchmessers, noch weiter bevorzugt kleiner als das 0,02fache des Zelldurchmessers und höchst bevorzugt kleiner als das 0,01 fache des Zelldurchmessers. Solche Blähgrafitpartikel können bei der Schaumherstellung gut in die Zellwände eingebaut werden und sich in den Zellinnenraum ausdehnen. Vorteilhafterweise können sich so kleine Partikel in der Fassade nicht so ausdehnen, daß ein Absprengen von Fassadenteilen zu erwarten ist.
Auch der Blähgrafit ist als Flammschutzmittel/Brandschutzmittel für Polystyrol an sich bekannt. Auf die EP1819758 wird Bezug genommen.

Anstelle von oder zusätzlich zu Metallhydroxid und/oder Blähgrafit können auch Flammschutzmittel/Brandschutzmittel aus folgender Aufstellung ausgewählt werden:
- Bimsgestein, Blähton
- Derivate des Lignins/bromiertes Lignin. Das Brom kann bei ungeschicktem Einsatz sehr störend sein. Gleichwohl kann das bromierte Lignin helfen, das Entstehen eines Verbrennungsprozesses zu hemmen, zu unterdrücken oder zu verringern
- Fasern aus Glas oder Keramik
- feuerfester Mörtel
- Kreide, Kalk, Gips
- Mineralien, Feuerstein/Siliziumdioxid, Silikaten, zum Beispiel Montmorillorit, Bentonit, Kaolin,
- Mikroglaskugeln sind mit einem Durchmesser von 0,005 bis 0,05mm handelsüblich. Mit diesem Durchmesser lassen sich die Mikroglaskugeln im Extruder in Polystyrol einarbeiten. Das gilt insbesondere für die Einarbeitung in Einschneckenextrudern und Doppelschneckenextrudern.
- Phosphor (rot), Phosphorverbindungen wie Phosphate oder Phosphatester Dieser Phosphor mit einem Schmelzpunkt von 44 Grad Celsius läßt bei der Pyrolyse von Thermoplasten nicht brennbare Gase entstehen.
In der kondensierten Phase können phosphorhaltige Flammschutzmittel die Verkohlung fördern. Der Phosphor wird vorzugsweise in Granulatform zugegeben, wobei jeder Granulat-Partikel mit Kunststoff umhüllt/gekapselt ist und ein Kunststoff mit deutlich höherem Schmelzpunkt als Polystyrol gewählt ist.
- Phosphorverbindungen wie Phosphate oder Phosphatester
- Schamotte
- Schwefel (gelb)
Auch der Schwefel wird vorzugsweise in Granulatform zugegeben, wobei jeder Granulat-Partikel mit Kunststoff umhüllt ist und ein Kunststoff mit deutlich höherem Schmelzpunkt als Polystyrol gewählt ist. Dieser Schwefel mit einem Schmelzpunkt von 115 Grad Celsius hat eine ähnliche Funktion wie Phosphor
- Talkum
- Vermiculit
Vermiculit ist ein Mineral und zugleich ein Schichtsilikat.
Vermiculit mit einem Schmelzpunkt über 1300 Grad Celsius ist inertes Material. Es schwächt die Brennstoffkettenreaktion. Lokale Orte des Vermiculit bleiben erhalten.
- Wasserglas

Das Lignin läßt sich aus Holz gewinnen. Es füllt die Zwischenräume zwischen den Cellulosefasern des Holzes. Bei der Cellulose-Gewinnung ist das Lignin ein Nebenprodukt. Je nach Verfahren bei der Cellulose-Gewinnung ist das Lignin gar nicht oder in erheblichem Umfang mit Salzen belastet.
Ein verunreinigungsfreie Gewinnungsverfahren ist ein mechanisches Verfahren, bei dem das Holz an Schleif- und Mahlsteinen zermahlen wird.
Bei einem anderen verunreinigungsfreien Verfahren (Refiner-Verfahren) wird das Holz zwischen Walzenpaaren zermahlen, die das Holz schneiden als auch quetschen/pressen. Dies kann ohne chemische Vorbehandlung erfolgen.

Bei chemischer Vorbehandlung wird zum Beispiel Natriumsulfit oder Nartriumhydroxid eingesetzt.
Die meist angewendeten Verfahren zur Cellulose-Gewinnung sind chemische Verfahren. Dazu gehören Sulfatverfahren, Sulfitverfahren und Sodaverfahren. Bei anderen, weniger häufig angewendeten Verfahren wird Ethanol und Natronlauge oder Natriumsulfit und Ethanol oder Essigsäure und Ameisensäure oder Ameisensäure und Wasserstoffperoxid angewendet oder erfolgt ein enzymatischer Aufschluß. Das so gewonnene Lignin wird nach der Erfindung depolymerisiert und in Mischung mit Polystyrolschaum als Brandschutz eingesetzt.
Das depolymerisierte Lignin fällt feinkörnig an, zum Teil pulverförmig. Nach der Erfindung wird das Eintragen des depolymerisierten Lignins in den Extruder durch ein Stopfwerk in dem Aufgabetrichter des Extruders unterstützt. Im einfachsten Fall ist das Stopfwerk ein Rührer. Die Förderwirkung der bekannten Rührer ist gering. Vorzugsweise findet ein aufrecht stehender Extruder als Stopfwerk Anwendung, nachfolgend Stopfextruder genannt. Der Stopfextruder kann unmittelbar an das Extrudergehäuse angeflanscht werden. Die Förderwirkung des Stopfextruders ist um Vieles besser als die Förderwirkung eines Rührers. Hinzu kommt, daß der Stopfextruder bereits mit einer Kühlvorrichtung versehen ist, Die Kühlvorrichtung/Kühlung wirkt einem durch Wärme verursachten Verklumpen des depolymerisierten Lignins im Einlauf des zur Verarbeitung der Einsatzstoffe vorgesehenen Extruders entgegen.

Bei Lignin mit Verunreinigungen ist zu klären, ob die Verunreinigungen einer Depolymerisierung schädlich sind, bevor eines der Verfahren zur Depolymerisierung angewendet wird, wie sie in der EP 1266810 oder in der WO2016/15078 beschrieben sind. Sofern die Verunreinigung schädlich sein können, erfolgt vor der Depolymerisierung eine Reinigung von den betreffenden Verunreinigungen. Vorzugsweise wird das Lignin dabei gewaschen

Durch die Depolymerisierung wird das Lignin leichter in das Polystyrol einarbeitbar. Desweiteren hat das depolymerisierete Lignin freie radiakale Guppen, die im Brandfall mit dem Flammschutzmittel/Brandschutzmittel und Brand-Zersetzungsprodukten reagieren können.

Das depolymerisierte Lignin fällt zumeist mit erheblicher Feuchte an. Deshalb wird in der EP3266810 gefordert, das Lignin bei 70 bis 120 Grad Celsius zu trocknen. Offen ist, wie die Trocknung erfolgen soll.
Von Vorteil ist, die Feuchte im Extruder zu verdampfen und abzuziehen. Dazu eignen sich besonders modulweise aufgebaute Extruder. Dann kann zunächst in einen ersten Modul
- zumindest allein das feuchte depolimisierete Lignin/Ligninderivate eingefüllt und
- auf eine Temperatur gebracht werden, bei der die Feuchtigkeit gut abdampft aber das depolymerisierte Lignin noch nicht erweicht.

Vorzugsweise liegt diese Temperatur mindestens 10 Grad Celsius unter der Erweichungstemperatur des jeweiligen Lignins, noch weiter bevorzugt mindestens 20 Grad Celsius und höchst bevorzugt mindestens 30 Grad Celsius unter der Erweichungstemperatur des jeweiligen Lignins.

Das Abziehen des Dampfes wird als Entgasen bezeichnet. Im einfachsten Fall ist dazu eine an den Extruder angeflanschte Saugleitung ausreichend. Soweit das Lignin dazu neigt, dem Saugzug und dem Dampf bei seinem Weg aus dem Extruder zu folgen, empfiehlt es sich, an der Öffnung für den Saugzug im Extrudermantel ein Sieb anzuordnen. Von Vorteil ist, wenn das Sieb mit der Innenseite des Extruders bündig abschließt. Dann bewirkt die Schnecke in diesem Modul zugleich eine Reinigung des Siebes. Gegebenenfalls ist sogar ein geringes (zum Beispiel bis 2mm) Zurücksetzen des Siebes gegenüber der Innenfläche von Vorteil. Dann sammelt sich vor dem Sieb eine definierte Schicht getrockneten Lignins, das als zusätzliche Filterschicht wirkt.
Das Verdampfen und Entgasen kann bis zu einer vernachlässigbaren Restfeuchte des Lignins erfolgen. Es kann aber auch eine Restfeuchte bleiben und als Treibmittelbestandteil bei einem anschließenden Schäumvorgang genutzt werden.

Der erste Modul /Abschnitt des Extruders ist vorzugsweise wie ein Einschneckenextruder gestaltet.

Soweit das entgaste Lignin bereits depolymerisiert ist, wird das Lignin vorzugsweise in einem weiteren Modul mit dem Polystyrol zusammen gebracht.

Das Polystyrol kann in Granulatform in den Extruder aufgegeben werden. Dann hilft die in dem Extruder bereits befindliche, erwärmte Ligninmenge bei der zum Aufschmelzen des Polystyrols erforderlichen Erwärmung.
Von Vorteil ist, wenn das Polystyrol in schmelzflüssiger Form in den weiteren Modul eingetragen wird. Vorzugsweise geschieht das dann über einen Seitenarmextruder, der zugleich die Schmelzleistung für das Polystyrol aufbringt. Der Seitenarmextruder hat seine Bezeichnung davon, daß er wie ein seitlicher Arm an dem Modul/Abschnitt angeordnet ist, Üblicherweise werden auch die Extruder als Seitenarmextruder bezeichnet, die oben auf dem Modul oder unten oder in geneigter Stellung an dem Modul/Abschnitt angeflanscht sind.

Zusammen mit dem Polystyrol können auch Additive und weitere Zuschläge in den zweiten Modul aufgegeben werden.

In dem zweiten Modul/Abschnitt und/oder in einem weiteren Extrudermodul/Abschnitt findet eine Mischung/Dispergierung des eingebrachten depolymerisierten Lignins, der Additive und Zuschläge in der Schmelze statt. Für diese Aufgabe sind Module/Abschnitte besonders geeignet, die wie Planetwalzenextruder gestaltet sind. Dabei setzt sich die Einschnecke aus dem ersten Modul als Zentralspindel in dem zweiten bzw. weiteren Modul fort.
Bei der Verwendung einer Planetwalzenextruderbauart für den zweiten Modul und/oder den weiteren Modul kann die Korngröße des depolymerisierten Lignins und aller anderen Feststoffe so gewählt werden, daß diese Stoffe durch diese Module/Abschnitte hindurch gehen. Das ist der Fall bei den oben wiedergegebenen üblichen Lignin-Korngrößen und bei größeren Planetwalzenextruderbaugrößen, die ein größeres Spiel zwischen den bewegten Teilen besitzen.
Aber auch größere depolymerisierte Ligninpartikel lassen sich im Planetwalzenextruder verarbeiten. Das gilt insbesondere nach Erwärmung des Lignins auf Erweichungstemperatur. Größere depolymerisierte Ligninpartikel lassen sich auch im Planetwalzenextruder zerkleinern.
Je feiner die Korngröße des Lignins ist, desto leichter und besser dispergiert das depolymerisierte Lignin in der Polystyrolschmelze.

Bei den oben aufgelisteten möglichen Flammschutzmitteln/Brandschutzmittel gibt es einige wie das ATH, die in der Polystyrolschmelze zerfallen können. Diese Flammschutzmittel/Brandschutzmittel können gegen Ende der Herstellung der Polystyrolschmelze und gegebenenfalls unter Reduzierung der Schmelzetemperatur und/oder als Compound mit anderem Kunststoff hergestellt werden und zugegeben werden. Dabei kann der Kunststoff das Flammschutzmittel/Brandschutzmittel ummanteln und so gegen ein Zerfallen schützen. Vorzugsweise handelt es sich bei diesem Kunststoff um einen anderen Kunststoff als Polystyrol mit einer höheren Schmelztemperatur/Erweitungstemperatur als Polystyrol.

Das ATH und auch andere Flammschutzmittel/Brandschutzmittel oder Additive und Zuschläge können gegen Ende der Polystyrolbearbeitung über Einfüllöffnungen aufgegeben werden, die in Extrusionsrichtung in einem Abstand von der oben erläuterten ersten Einfüllöffnung angeordnet sind. Dabei ist wiederum eine Zugabe durch einen Stopfextruder von Vorteil.

Bei der Extrusion von Polystyrolschaum werden der Schmelze ein oder mehrere Treibmittel zugesetzt. Das bzw. die Treibmittel werden dem Extruder in flüssiger oder superkritischer Form zugegeben. Dieser Aggregatzustand des Treibmittels wird dadurch erreicht, daß das Treibmittel vor der Zugabe in den Extruder unter Druck gesetzt wird. Das Treibmittel wird üblicherweise zwischen zwei Planetwalzenextrudermodulen/Abschnitten mittels eines Ringes in die Schmelze eingedüst. Der Ring ist entsprechend hohl ausgebildet und an den schmelzeberührten Flächen mit Austrittsöffnungen für die Treibmittelflüssigkeit versehen. Die Treibmittelflüssigkeit wird durch eine Leitung zugeführt, die in dem Spalt zwischen den beiden Planetwalzenextrudermodulen zu dem Ring verläuft.
Unter dem im Planetwalzenextrudermodul/Abschnitt herrschenden Druck wird das Treibmittel an einer Ausdehnung gehindert und von den umlaufenden Planetspindeln und der Zentralspindel in der Schmelze fein verteilt. Anschließend wird die Schmelze durch eine oder mehrere Düsen hindurch aus dem Extruder gedrückt.

Bei einer einzigen nachgeordneten Düse ist die Düse eine Schlitzdüse. Der aus der Schlitzdüse in die Umgebungsluft austretende Schmelzestrang schäumt um ein Vielfaches auf. Dabei findet die aufschäumende Schmelze an den Innenwänden eines dem Extruder nachgeschalteten Kalibrators eine Grenze. An den Innenwänden bildet sich eine Haut an dem Schmelzestrang. Die Haut stabilisiert den Schmelzestrang nach Verlassen des Kalibrators bei der Abkühlung auf einem Rollengang. Der Schmelzestrang hat zumeist einen rechteckigen Querschnitt und wird nach ausreichender Abkühlung zu Platten abgelängt. Die Platten finden insbesondere für Bauzwecke Verwendung.
Der Polystyrolschaumstrang kann auch andere Querschnitte aufweisen, zum Beispiel für Zierleisten. Dann wird der Strang auf Längen abgelängt, die für den Transport und die Lagerung der abgelängten Stücke geeignet sind.

Bei einer Vielzahl nachgeordneter Düsen werden diese Düsen in der Regel genutzt, um eine entsprechende Anzahl von feinen Schmelzesträngen herzustellen, die anschließend in geringen Abständen abgelängt werden, so daß ein Granulat entsteht, das als Ausgangsstoff für weitere Bearbeitungsvorgänge dient. Die Granulierung erfolgt vorzugsweise unter Wasser. Das Wasser steht gegenüber der Umgebung unter erheblichem Druck, so daß die einzelnen Partikel nicht bzw. nicht wesentlich aufschäumen können und treibmittelbeladene Beads entstehen. Weiter bewirkt das Wasser, daß die Beads schnell abkühlen und nicht miteinander verklumpen.
Das Granulat hat wahlweise einen Durchmesser von höchsten 1,6mm, weiter vorzugsweise von höchstens 1mm und weiter bevorzugt von höchstens 0,8mm. Günstiger können noch kleinere Durchmesser von zum Beispiel höchstens 0,6mm sein. Der Granulatdurchmesser kann auch 0,2mm betragen.

Die so gewonnenen Partikel, die ein Treibmittel beinhalten, besitzen eine transportfreundliche und lagerfreundliche Form, die für eine Lieferung an Abnehmer günstig ist. Dort werden die Partikel aufgeschäumt und in Formteilautomaten zu Formteilen, insbesondere zu Blöcken, miteinander verbunden/verschweißt/versintert. Das geschieht unter entsprechender Erwärmung und Druck. Die Erwärmung und mindestens teilweise auch den Druck liefert Heißdampf. Im Übrigen kann der Druck durch den Fülldruck beim Füllen des Formteilautomaten entstehen.

die ohne weitere Bearbeitung eine Anwendung erfüllen können, zum Beispiel im Verpackungsbereich.
Die Blöcke werden nach entsprechender Lagerung zu Platten geschnitten, die als EPS-Platten zu Bauzwecken verwendet werden.
Die anderen Formteile können ohne weitere Bearbeitung zum Einsatz kommen.

## Patentansprüche

1. Herstellung flammgeschützter/brandgeschützter Formteile, insbesondere Polystyrolschaumplatten, wobei
- die Polystyrolschaumplatten für Bauzwecke
- durch Einführen von Einsatzstoffen, einschließlich Polystyrol Aufschmelzen des Polystyrols,
Einmischung der anderen Einsatzstoffe in die Schmelze,
Zugabe eines oder mehrerer Treibmittel in flüssiger/superkritischer Form zur Polystyrolschmelze,
Austragen der Schmelze durch eine Düse in eine Umgebung mit geringerem Druck in einen Kalibrator unter Aufschäumung der Schmelze,
Bildung eines Extrusionsstranges
Abkühlen des Schmelzestranges und Bearbeitung des Extrusionsstranges,
Ablängen des Extrusionsstranges erzeugt werden
**oder**
- durch Einführen von Einsatzstoffen einschließlich Polystyrol und eines Aufschmelzen des Polystyrols in einem Extruder ,
Einmischung der anderen Einsatzstoffe in die Schmelze,
Zugabe eines oder mehrerer Treibmittel in flüssiger/superkritischer Form zur Polystyrolschmelze,
Austragen der Schmelze aus dem Extruder durch eine Vielzahl kleiner Düsen hindurch als dünne Schmelzestränge in eine Umgebung mit höherem Druck,
Zerkleinerung der Schmelzestränge zu
einem Granulat durch Unterwassergranulierung,
Vorschäumen des Granulates beim Abnehmer
Einfüllen des Schaumgranulates in einen Formteilautomaten, Beaufschlagung des Schaumgranulates im Formteilautomaten mit Heißdampf
Verschweißen oder Versintern des Schaumgranulates im Formteilautomaten zu einem Formteil, insbesondere zu einem Block, der anschließend zu Platten aufgeteilt wird,
**dadurch gekennzeichnet,**
**daß** depolymerisiertes Lignin der Einsatzmischung zugesetzt wird, wobei der Anteil des depolymerisierten Lignins oder der Derivate von depolymerisiertem Lignin höchstens 50Gew%, vorzugsweise höchstens 25 Gew% und noch weiter bevorzugt höchstens 10 Gew% und höchst bevorzugt höchstens 3 Gew% beträgt, bezogen auf die gesamte Einsatzmischung.

2. Herstellung nach Anspruch 1, **gekennzeichnet durch** die Zugabe mindestens eines weiteren Flammschutzmittel aus folgender Gruppe
- Bimsgestein, Blähton
- Fasern aus Glas oder Keramik
- feuerfester Mörtel
- kohlenstoffhaltige Flammschutzmittel, Blähgrafit
- Kreide, Kalk, Gips
- Metallhydroxide
- Mineralien, Feuerstein-Siliziumdioxid, Silikate
- Mikroglaskugeln
- Phosphor (rot)
- phosphorhaltige Flammschutzmittel
- Phosphorverbindungen enthaltende Flammschutzmittel
- Schamotte
- Schwefel (gelb)
- Talkum
- Vermiculit
- Wasserglas

3. Herstellung nach Anspruch 1 oder 2,
**gekennzeichnet durch** die Zugabe von Aluminiumhydroxid oder von Magnesiumhydroxid,
wobei die Schaumherstellung im Falle von Magnesiumhydroxid unterhalb der Zersetzungstemperatur des Magnesiumhydroxids erfolgt oder
im Falle von Aluminiumhydroxid das Aluminiumhydroxid durch eine Ummantelung mit einem Kunststoff, der eine höhere Schmelztemperatur als Polystyrol besitzt, gegen eine Zersetzung geschützt ist.

4. Herstellung nach einem der Ansprüche 1 bis 3,
**gekennzeichnet durch** die Zugabe von Blähgrafit,
wobei die Zugabemenge von Blähgrafit in Bezug auf das Lignin die gleiche ist wie die von Aluminiumhydroxid oder von Magnesiumhydroxid und
das Blähgrafit eine Partikelgröße hat, die kleiner als der Zelldurchmesser des Kunststoffschaumes ist.

5. Herstellung nach einem der Ansprüche 1 bis 4.
**dadurch gekennzeichnet,**
**daß** das depolymerisierte Lignin und das Polystyrol unabhängig voneinander erwärmt werden und nach dem Aufschmelzen des Polystyrols eine Vermischung stattfindet.

6. Herstellung nach einem der Ansprüche 1 bis 5,
**gekennzeichnet durch** eine Zwangsführung feinkörniger und staubförmiger Flammschutzmittel/Brandschutzmittel bei der Aufgabe in den Extruder.

7. Herstellung nach Anspruch 6, **gekennzeichnet durch** die Verwendung eines senkrecht über der Füllöffnung des Extruders stehenden weiteren Extruders mit einer Kühlung als Materialzuführung.

8. Herstellung nach einem der Ansprüche 1 bis 7, **gekennzeichnet durch** eine Beheizung von in den Extruder eingefüllten feuchten Einsatzstoffen zur Verdampfung der Feuchte und anschließende Entfernung des Dampfes durch Entgasung.

9. Herstellung nach Anspruch 8, **dadurch gekennzeichnet, daß** bei der Trocknung der feuchten Einsatzstoffen eine Restfeuchte verbleibt und als Co-Treibmittel bei der Schaumherstellung genutzt wird..

10. Herstellung nach einem der Ansprüche 1 bis 9, **dadurch gekennzeichnet, daß** zunächst ein Masterbatch aus einem oder mehreren Flammschutzmitteln mit einer Teilmenge des Polystyrols in Granulatform erzeugt wird und anschließend mit den übrigen Einsatzstoffen im Extruder zusammen geführt wird.

11. Herstellung nach Anspruch 10, **dadurch gekennzeichnet, daß** die Masterbatchzeugung ohne das Treibmittel erfolgt.

12. Herstellung nach Anspruch 10 oder 11, **dadurch gekennzeichnet, daß** die zur Masterbatcherzeugung verwendete Teilmenge des Polystyrols höchstens 30Gew%, vorzugsweise höchstens 20Gew% und noch weiter bevorzugt höchstens 10Gew% der Einsatzmischung im Extruder ist.
